(19) Europäisches Patentamt
European Patent Office
Office européen des brevets

(11) Veröffentlichungsnummer: **0 087 043**
**A1**

(12) # EUROPÄISCHE PATENTANMELDUNG

(21) Anmeldenummer: 83101116.8

(22) Anmeldetag: 07.02.83

(51) Int. Cl.³: **A 01 N 43/64**
//(A01N43/64, 39/02)

(30) Priorität: 18.02.82 DE 3205889

(43) Veröffentlichungstag der Anmeldung:
31.08.83 Patentblatt 83/35

(84) Benannte Vertragsstaaten:
AT BE CH DE FR GB IT LI NL SE

(71) Anmelder: BAYER AG
Zentralbereich Patente, Marken und Lizenzen
D-5090 Leverkusen 1, Bayerwerk(DE)

(72) Erfinder: Schmidt, Robert R., Dr.
Im Waldwinkel 110
D-5060 Bergisch-Gladbach 2(DE)

(72) Erfinder: Förster, Heinz, Dr.
Am Eckbusch 47
D-5600 Wuppertal 1(DE)

(72) Erfinder: Schlee, Hans Georg, Dr.
Florastrasse 25
D-5090 Leverkusen 3(DE)

(54) **Mittel zur selektiven Unkrautbekämpfung.**

(57) Wirkstoffkombination bestehend aus
- 1-Amino-3-(2,2-dimethyl-propyl)-6-ethylthio-1,3,5-triazin-2,4(1H, 3H)-dion der Formel

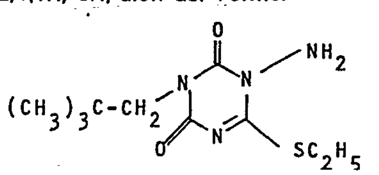

(I)

und

- 5-(2,6-Dichlor-4-trifluormethyl-phenoxy)-2-nitro-α-phenoxy-propionsäure-(hydroxyessigsäureethylester)-ester der Formel

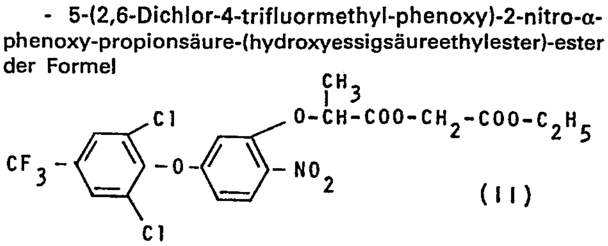

(II)

zur selektiven Unkrautbekämpfung in Nutzpflanzenkulturen.

EP 0 087 043 A1

Croydon Printing Company Ltd.

0087043

BAYER AKTIENGESELLSCHAFT 5090 Leverkusen, Bayerwerk

Zentralbereich
Patente, Marken und Lizenzen Dü/Hed-c

III

# Mittel zur selektiven Unkrautbekämpfung

Die vorliegende Erfindung betrifft eine neue Wirkstoffkombination, die aus dem bekannten 1-Amino-3-(2,2-dimethyl-propyl)-6-ethylthio-1,3,5-triazin-2,4(1H, 3H)-dion einerseits und aus einem bekannten Phenoxycarbonsäure-carbonylalkylester andererseits besteht und besonders gut zur selektiven Unkrautbekämpfung in Nutzpflanzenkulturen geeignet ist.

Es ist bereits bekannt geworden, daß man 1-Amino-3-(2,2-dimethyl-propyl)-6-ethylthio-1,3,5-triazin-2,4(1H,3H)-dion als selektiv wirkendes Herbizid verwenden kann (vgl. DK-PS 136 067). Weiterhin ist bekannt, daß sich Phenoxycarbonsäure-carbonylalkylester, wie zum Beispiel der 5-(2,6-Dichlor-4-trifluormethyl-phenoxy)-2-nitro-$\alpha$-phenoxypropionsäure-(hydroxyessigsäureethylester)-ester, zur selektiven Unkrautbekämpfung einsetzen lassen (vgl. DE-OS 2 906 087).

Die vorgenannten Stoffe zeigen eine gute Verträglichkeit in Nutzpflanzenkulturen, insbesondere in Getreidekulturen, weisen aber gegenüber wichtigen Unkräutern und Ungräsern manchmal gewisse Schwächen auf.

Es wurde nun gefunden, daß die neue Wirkstoffkombination aus

-1-Amino-3-(2,2-dimethyl-propyl)-6-ethylthio-1,3,5-triazin-2,4(1H,3H)-dion der Formel

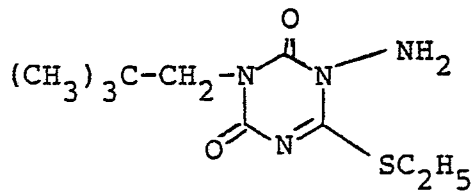

(I)

und

-5-(2,6-Dichlor-4-trifluormethyl-phenoxy)-2-nitro-α-phenoxy-propionsäure-(hydroxyessigsäureethylester)-ester der Formel

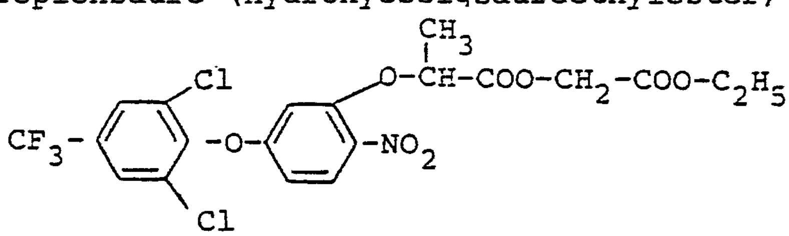

(II)

eine besonders hohe selektive herbizide Wirksamkeit aufweist.

Überraschender Weise ist die herbizide Wirksamkeit der erfindungsgemäßen Wirkstoffkombination wesentlich höher als die Summe der Wirkungen der einzelnen Wirkstoffe. Es liegt also ein nicht vorhersehbarer synergistischer Effekt vor und nicht nur eine Wirkungsergänzung.

Die in der erfindungsgemäßen Wirkstoffkombination enthaltenen Wirkstoffe sind bereits bekannt (vgl. DK-PS 136 067 und DE-OS 2 906 087).

Der synergistische Effekt der erfindungsgemäßen Wirkstoffkombination zeigt sich vor allem dann, wenn die Wirkstoffe der Formeln (I) und (II) in bestimmten Gewichtsverhältnissen vorhanden sind. Jedoch können die Gewichtsverhältnisse in der Wirkstoffkombination in relativ großen Bereichen schwanken. Im allgemeinen entfallen auf 2 Gewichtsteil an Wirkstoff der Formel (I) 0,01 bis 2 Gewichtsteile, vorzugsweise 0,02 bis 1 Gewichtsteil an Wirkstoff der Formel (II).

Die erfindungsgemäße Wirkstoffkombination zeigt eine sehr gute Wirkung gegen Unkräuter und Ungräser in Nutzpflanzenkulturen, insbesondere in Getreide. Unter Unkräutern und Ungräsern im weitesten Sinne sind alle Pflanzen zu verstehen, die an Orten wachsen, wo sie unerwünscht sind.

Die erfindungsgemäße Wirkstoffkombination kann z.B. bei den folgenden Pflanzen verwendet werden:

Dikotyle Unkräuter der Gattungen: Sinapsis, Lepidium, Galium, Stellaria, Matricaria, Anthemis, Galinsoga, Chenopodium, Urtica, Senecio, Amaranthus, Portulaca, Xanthium, Convolvulus, Ipomoea, Polygonum, Sesbania, Ambrosia, Cirsium, Carduus, Sonchus, Solanum, Rorippa, Rotala, Lindernia, Lamium, Veronica, Abutilon, Emex, Datura, Viola, Galeopsis, Papaver, Centaurea.

Dikotyle Kulturen der Gattungen: Gossypium, Glycine, Beta, Daucus, Phaseolus, Pisum, Solanum, Linum, Ipomoea, Vicia, Nicotiana, Lycopersicon, Arachis, Brassica, Lactuca, Cucumis, Cucurbita.

Monokotyle Unkräuter der Gattungen: Echinochloa, Setaria, Panicum, Digitaria, Phleum, Poa, Festuca, Eleusine, Brachiaria, Lolium, Bromus, Avena, Cyperus, Sorghum, Agropyron, Cynodon, Monochoria, Fimbristylis, Sagittaria, Eleocharis, Scirpus, Paspalum, Ischaemum, Sphenoclea, Dactyloctenium, Agrostis, Alopecurus, Apera.

Monokotyle Kulturen der Gattungen: Oryza, Zea, Triticum, Hordeum, Avena, Secale, Sorghum, Panicum, Saccharum, Ananas Asparagus, Allium.

Die Verwendung der erfindungsgemäßen Wirkstoffkombination ist jedoch keineswegs auf diese Gattungen beschränkt, sondern erstreckt sich in gleicher Weise auch auf andere Pflanzen.

Besonders hervorzuheben ist die gute Wirksamkeit der erfindungsgemäßen Wirkstoffkombination gegen schwer bekämpfbare Unkräuter sowie gegen schwer bekämpfbare Ungräser. Von entscheidendem Vorteil ist es, daß solche üblicherweise schwer bekämpfbaren Unkräuter und Ungräser mit der erfindungsgemäßen Wirkstoffkombination gleichzeitig bekämpft werden können.

Ein Einsatz der erfindungsgemäßen Wirkstoffkombination zur selektiven Unkrautbekämpfung ist vorzugsweise möglich in Mais und anderen Getreidekulturen, wie z.B. Hafer, Gerste, Weizen und Roggen.

Die Wirkstoffkombination kann in die üblichen Formulierungen übergeführt werden, wie Lösungen, Emulsionen, Spritzpulver, Suspensionen, Pulver, Stäubemittel, Pasten, lösliche Pulver, Granulate, Suspensions-Emulsions-Konzentrate, Wirkstoff-imprägnierte Natur- und synthetische Stoffe, Feinstverkapselungen in polymeren Stoffen.

Diese Formulierungen werden in bekannter Weise hergestellt, z.B. durch Vermischen der Wirkstoffe mit Streckmitteln, also flüssigen Lösungsmitteln, und/oder festen Trägerstoffen, gegebenenfalls unter Verwendung von oberflächeaktiven Mitteln, also Emulgiermitteln und/oder Dispergiermitteln und/oder schaumerzeugenden Mitteln. Im Falle der Benutzung von Wasser als Streckmittel können z.B. auch organische Lösungsmittel als Hilfslösungsmittel verwendet werden. Als flüssige Lösungsmittel kommen im wesentlichen in Frage: Aromaten, wie Xylol, Toluol, oder Alkylnaphthaline, chlorierte Aromaten oder chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, Alkohole, wie Butanol, oder Glykol sowie deren Ether, Ester, Ketone, wie Aceton, Methylethylketon, Methylisobutylketon oder Cyclohexanon, stark polare Lösungsmittel, wie Dimethylformamid und Dimethylsulfoxid, sowie Wasser.

<u>Als feste Trägerstoffe kommen in Frage:</u>
z.B. natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate; als feste Trägerstoffe für Granulate kommen in Frage: z.B.

gebrochene und fraktionierte natürliche Gesteine wie Calcit, Marmor, Bims, Sepiolith, Dolomit sowie synthetische Granulate aus organischen und anorganischen Mehlen, sowie Granulate aus organischem Material wie Sägemehl, Kokosnußschalen, Maiskolben und Tabakstengel; als Emulgier- und/oder schaumerzeugende Mittel kommen in Frage: z.B. nichtionogene und anionische Emulgatoren, wie Polyoxyethylen-Fettsäure-Ester, Polyoxyethylen-Fettalkohol-Ether, z.B. Alkylarylpolyglykolether, Alkylsulfonate, Alkylsulfate, Arylsulfonate sowie Eiweißhydrolysate; als Dispergiermittel kommen in Frage: z.B. Lignin-Sulfitablaugen und Methylcellulose.

Es können in den Formulierungen Haftmittel wie Carboxymethylcellulose, natürliche und synthetische pulverige körnige oder latexförmige Polymere verwendet werden, wie Gummiarabicum, Polyvinylalkohol, Polyvinylacetat.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe wie Salze von Eisen, Mangan, Bor, Kupfer, Kobalt, Molybdän und Zink verwendet werden.

Die Formulierungen enthalten im allgemeinen zwischen o,1 und 95 Gewichtsprozent Wirkstoff, vorzugsweise zwischen 0,5 und 90 %.

Die erfindungsgemäße Wirkstoffkombination kann als solche oder in ihren Formulierungen auch in Mischung mit bekannten Herbiziden zur Unkrautbekämpfung Verwendung finden, wobei Fertigformulierung oder Tankmischung möglich ist. Auch eine Mischung mit anderen

bekannten Wirkstoffen, wie Fungiziden, Insektiziden, Akariziden, Nematiziden, Schutzstoffen gegen Vogelfraß, Wuchsstoffen, Pflanzennährstoffen und Bodenstrukturverbesserungsmitteln ist möglich.

Die Wirkstoffkombination kann als solche, in Form ihrer Formulierungen oder den daraus durch weiteres Verdünnen bereiteten Anwendungsformen, wie gebrauchsfertige Lösungen Suspensionen, Emulsionen, Pulver, Pasten und Granulate angewandt werden. Die Anwendung geschieht in üblicher Weise, z.B. durch Gießen, Spritzen, Sprühen, Streuen.

Die erfindungsgemäße Wirkstoffkombination kann sowohl vor als auch nach dem Auflaufen der Pflanzen appliziert werden. Sie kann auch vor der Saat in den Boden eingearbeitet werden.

Die aufgewandte Wirkstoffmenge kann in größeren Bereichen schwanken. Sie hängt im wesentlichen von der Art des gewünschten Effekts ab. Im allgemeinen liegen die Aufwandmengen zwischen 0,1 und 20 kg Wirkstoff pro ha, vorzugsweise zwischen 0,5 und 10 kg/ha.

Die gute herbizide Wirkung der erfindungsgemäßen Wirkstoffkombination geht aus den nachfolgenden Beispielen hervor. Während die einzelnen Wirkstoffe in der herbiziden Wirkung Schwächen aufweisen, zeigt die Kombination eine Unkrautwirkung, die über eine einfache Wirkungssummierung hinausgeht.

Ein synergistischer Effekt liegt bei Herbiziden immer dann vor, wenn die herbizide Wirkung der Wirkstoffkombination größer ist, als die der einzeln applizierten Wirkstoffe.

Die zu erwartende Wirkung für eine gegebene Kombination zweier Herbizide kann (vgl. Colby, S.R., "Calculating synergistic and antagonistic responses of herbicide combinations", Weeds 15, Seiten 20 - 22, 1967) wie folgt berechnet werden:

Wenn X = % Schädigung durch Herbizid A bei p kg/ha Aufwandmenge

und Y = % Schädigung durch Herbizid B bei q kg/ha Aufwandmenge

und E = die erwartete Schädigung der Herbizide A und B bei p und q kg/ha Aufwandmenge bedeutet,

dann ist $E = X + Y - \frac{X \cdot Y}{100}$

Ist die tatsächliche Schädigung größer als berechnet, so ist die Kombination in ihrer Wirkung überadditiv, das heißt es liegt ein synergistischer Effekt vor.

Die gefundene herbizide Wirkung der erfindungsgemäßen Wirkstoffkombination ist bei den Unkräutern und Ungräsern größer als die berechnete, d.h. es liegt ein echter synergistischer Effekt vor.

Beispiel A

Post-emergence-Test

Lösungsmittel: 5 Gewichtsteile Aceton
Emulgator: 1 Gewichtsteil Alkylarylpolyglycolether

Zur Herstellung einer zweckmäßigen Wirkstoffzubereitung vermischt man 1 Gewichtsteil Wirkstoff bzw. Wirkstoffgemisch mit der angegebenen Menge Lösungsmittel, gibt die angegebene Menge Emulgator zu und verdünnt das Konzentrat mit Wasser auf die gewünschte Konzentration.

Mit der Wirkstoffzubereitung spritzt man die Testpflanzen, welche eine Höhe von 5-15 cm haben so, daß die jeweils gewünschte Wirkstoffmenge pro Flächeneinheit ausgebracht wird. Die Konzentration der Spritzbrühe wird so gewählt, daß in 2000 l Wasser/ha die jeweils gewünschte Wirkstoffmenge ausgebracht wird. Nach drei Wochen wird der Schädigungsgrad der Pflanzen bonitiert in % Schädigung im Vergleich zur Entwicklung der unbehandelten Kontrolle. Es bedeuten:

0 % = keine Wirkung (wie unbehandelte Kontrolle)
100 % = totale Vernichtung

In diesem Test zeigt die erfindungsgemäße Wirkstoffkombination eine Wirkung, die höher ist als die Summe der Wirkungen der einzelnen Wirkstoffe.

T a b e l l e   A

Post-emergence-Test

| Wirkstoff | Aufwandmenge an Wirkstoff in kg/ha | Avena fatua berechnet +) | gefunden | Weizen berechnet +) | gefunden |
|---|---|---|---|---|---|
| (I) | 0,7 | | 20 | | 0 |
| (II) | 0,05 | | 0 | | 0 |
| (I) + (II) | 0,7 + 0,05 | 20 | 50 | 0 | 0 |

+) Berechnet nach der Colby-Gleichung

Patentansprüche

1) Herbizide Mittel zur selektiven Unkrautbekämpfung in Nutzpflanzenkulturen, gekennzeichnet durch einen Gehalt an einer Wirkstoffkombination bestehend aus

-1-Amino-3-(2,2-dimethyl-propyl)-6-ethylthio-1,3,5-triazin-2,4(1H, 3H)-dion der Formel

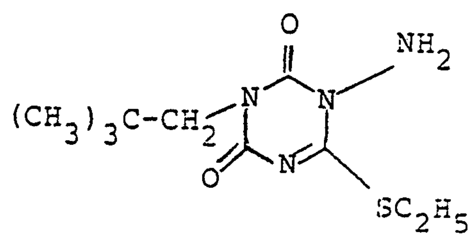

(I)

und

-5-(2,6-Dichlor-4-trifluormethyl-phenoxy)-2-nitro-α-phenoxy-propionsäure-(hydroxyessigsäureethylester)-ester der Formel

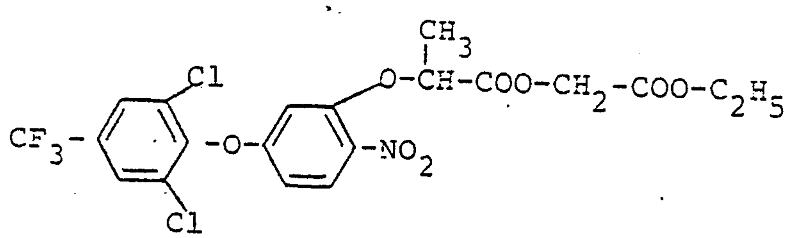

(II)

2) Mittel gemäß Anspruch 1, dadurch gekennzeichnet, daß in der Wirkstoffkombination das Gewichtsverhältnis von Wirkstoff der Formel (I) zu Wirkstoff der Formel (II) zwischen 1:0,01 und 1:2 liegt.

3) Verfahren zur selektiven Unkrautbekämpfung in Nutzpflanzenkulturen, dadurch gekennzeichnet, daß man eine Wirkstoffkombination aus den Wirkstoffen der Formeln (I) und (II) auf die Pflanzen oder ihren Lebensraum ausbringt.

4) Verwendung einer Wirkstoffkombination aus den Wirkstoffen der Formeln (I) und (II) zur selektiven Unkrautbekämpfung in Nutzpflanzenkulturen.

5) Verfahren zur Herstellung von herbiziden Mitteln zur selektiven Unkrautbekämpfung in Nutzpflanzenkulturen, dadurch gekennzeichnet, daß man eine Wirkstoffkombination aus den Wirkstoffen der Formeln (I) und (II) mit Streckmitteln und/oder oberflächenaktiven Stoffen vermischt.

Europäisches Patentamt

**EUROPÄISCHER RECHERCHENBERICHT**

0087043
Nummer der Anmeldung

EP 83 10 1116

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. [3]) |
|---|---|---|---|
| A | EP-A-0 014 900 (BAYER)<br>----- | 1-5 | A 01 N 43/64 //<br>(A 01 N 43/64<br>A 01 N 39/02 ) |
| | | | **RECHERCHIERTE SACHGEBIETE (Int. Cl. [3])** |
| | | | A 01 N |

Der vorliegende Recherchenbericht wurde für alle Patentansprüche erstellt.

| Recherchenort | Abschlußdatum der Recherche | Prüfer |
|---|---|---|
| DEN HAAG | 17-05-1983 | DECORTE D. |

KATEGORIE DER GENANNTEN DOKUMENTEN
X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument